# EUROPEAN PATENT APPLICATION

(11) **EP 2 278 521 A2**
(43) Date of publication of application: **26.01.2011**
(21) Application number: 10164810.3
(22) Date of filing: 03.06.2010
(51) Int. Cl.: G06F 21/00

(54) **Devices and methods for auditing and enforcing computer game licenses**

(30) Priority: 19.06.2009 US 218566 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

Techniques are provided for monitoring and controlling use of a computer game on a remote computing device. One such technique employs a processor with memory and transceiver configured to receive from the device, in response to an attempt to play the game on the device, a combination of a game identifier for the game and a device identifier for the device, the device identifier based on a combination of user-configurable parameter and non-user-configurable parameters, and to access a database of known game identifiers, each known game identifier being associated with a device count corresponding to a total number of known devices on which a known game was previously played and with known device identifiers for the known devices, to control remote access to games, for example, according to licensing constraints.

## Description

This application claims priority to U.S. Provisional Application No. 61/218,566 which was filed June 19, 2009 and which is fully incorporated herein by reference.

### BACKGROUND OF THE INVENTION

### Field of the Invention

The present invention is directed toward systems for enforcing computer game licenses, and more particularly, to a system that communicates or interfaces with a user's device to measure the device hardware configuration and thereby generate a device identifier for monitoring games on the device.

### Description of the Related Art

Currently, there exist limited ways to audit and enforce computer or video game licenses. At the same time, game/software piracy continues to grow at an alarming rate, particularly in emerging economies. In response, game publishers and licensing authorities have focused primarily on making it more difficult for would-be pirates to install a given game illegally, such as a single copy of the game on multiple machines. Still, software pirates have found ways to bypass such security measures and install unauthorized copies of games on multiple machines. Accordingly, it would be desirable to provide a technique for monitoring which and how many devices a given game has been played/installed on, and for enforcing the terms of a game license based on information regarding which devices the given game has been played on.

### SUMMARY OF THE INVENTION

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with an apparatus/device for monitoring use of a computer game (e.g., by a game publisher, license authority, etc.). In one embodiment, the apparatus may include: a transceiver component for communicating with a computing device of a user; at least one processor operatively coupled with the transceiver component; and a memory component operatively coupled with the at least one processor and including executable code for the at least one processor.

For example, the at least one processor, in response to the user attempting to play the game on the device, may receive from the device a combination of (a) a game identifier for the game and (b) a device identifier for the device, the device identifier being based on a combination of at least one user-configurable parameter and at least one non-user-configurable parameter of the device. The at least one processor may access a database of known game identifiers, each known game identifier being associated with (a) a device count corresponding to a total number of known devices on which a known game was previously played and (b) the known device identifiers for the known devices.

In related aspects, the at least one processor may update the database in response to the combination of the game identifier and the device identifier being unique from known combinations of the known game identifiers and the known device identifiers. The at least one processor may use the database to monitor the distribution and/or use of the game.

In further related aspects, the device count may be capped at a maximum device count to curb sharing of the game, such that the at least one processor, in response to the device count having reached the maximum device count, instructs the device to disallow the user from playing the game on the device. The at least one processor, in response to the device count being reset, may instruct the device to allow the user to play the game on the device. The at least one processor may reset the device count in response to receiving a device count reset request from a retailer. The at least one processor may bill the retailer for the resetting of the device count.

In yet further related aspects, the user may be a customer who purchases the game from a retailer. In the alternative, or in addition, the user may be a borrower or casual pirate who borrows the game from a customer who purchases the game from a retailer

In still further related aspects, in response to the borrower making a payment for a device count reset request, the at least one processor may credit a share of the payment to the retailer and/or the customer. In another example, in response to the borrower and/or the customer making a payment for a device count reset request, the at least one processor may credit a share of the payment to the retailer.

In other related aspects, in response to the game identifier not matching any of the known game identifiers in the database, the at least one processor may: add the game identifier to the database; associate the device identifier with the game identifier in the database; and create a corresponding device count for the game.

In other related aspects, in response to the game identifier matching a given known game identifier, the at least one processor may: (1) in response to the device identifier not matching any known device identifiers associated with the given known game identifier, (a) associate the device identifier with the given known game identifier and (b) increment a given device count for the given known game identifier by one; and (2) in response to the device identifier matching a given known device identifier already associated with the given known game identifier, audit information in the database may be updated. In one approach, the audit information may be updated whenever a game identifier and/or device identifier are crosschecked against known identifiers in the database.

In accordance with other aspects of the embodiments described herein, there is provided an apparatus for monitoring use of a computer game. In one embodiment, the apparatus may include: a transceiver component for communicating with a license authority (e.g., a server); at least one processor operatively coupled with the transceiver component; and a memory component operatively coupled with the at least one processor and including executable code for the at least one processor.

For example, the at least one processor may collect machine parameters of a computing device, wherein the machine parameters include a combination of at least one user-configurable parameter and at least one non-user-configurable parameter of the device. The at least one processor may generate a device identifier for the device based at least in part on the machine parameters. The at least one processor, in response to a user attempting to play the game on the device, may instruct the transceiver to send a game identifier (e.g., game serial number, Stock Keeping Unit (SKU) number, or the like) for the game and the device identifier to the license authority.

In related aspects, the transceiver may receive one of an allow instruction and a disallow instruction from the license authority based on a device count associated with the game identifier. The device count may correspond to a total number of known devices on which the game was previously played. The allow instruction, command, or signal from a license authority may allow the user to play the game on the device, whereas the disallow instruction may prevent the user from playing the game on the device.

In further related aspects, the memory component may include executable code for the at least one processor to associate the game identifier with the device identifier to generate an audit number, and the transceiver may send the audit number to the license authority. For example, the at least one processor may associate the software identifier with the device identifier by concatenating the software identifier with the device identifier. In another example, the at least one processor may determine a geo-location code (e.g., Internet Protocol (IP) address, GPS data, cell site triangulation data, or the like, or combinations thereof) for the device, and may associate the geo-location code with at least one of the software identifier and the device identifier to generate the audit number.

In further related aspects, the at least one processor may generate the device identifier by implementing at least one irreversible transformation (e.g., cryptographic hash function) such that the machine parameters cannot be derived from the device identifier.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 provides a block diagram of an exemplary system for auditing distributed software.

FIG. 2 provides a block diagram of another exemplary system for auditing distributed software, wherein the system includes an authentication server.

FIG. 3 illustrates the components of an exemplary device identifier.

FIG. 4A illustrates one embodiment an apparatus for monitoring use of a computer game.

FIGS. 4B-C illustrate sample aspects of the apparatus shown in FIG. 4A.

FIG. 5A illustrates another embodiment an apparatus for monitoring use of a computer game.

FIG. 5B illustrates sample aspects of the apparatus shown in FIG. 5A.

FIG. 6A-C show one embodiment of a method for monitoring use of a computer game.

FIG. 7 shows another embodiment for a method for monitoring use of a computer game.

### DETAILED DESCRIPTION

The present invention addresses the need for an auditing/enforcement service that provides reliable computer/video game license authentication and provides game owners, publishers, and/or license authorities with a measure of how many copies of their game are legitimate and/or unauthorized under the game licenses. Such an auditing service may be used alone, or in conjunction with other security/authentication measures.

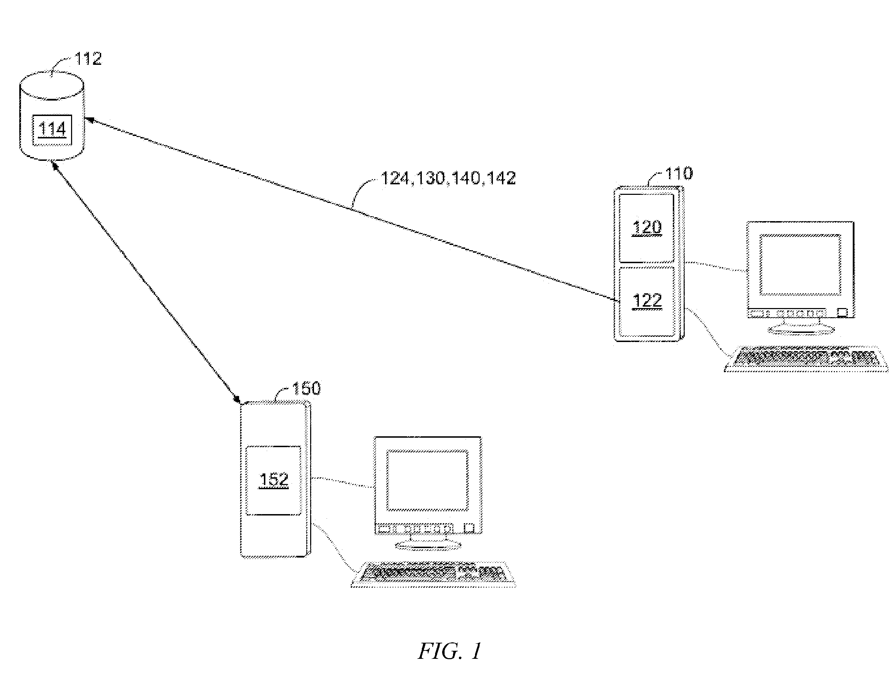

The present technology provides for an improved system and method for auditing distributed games. In accordance with one aspect of the present technology, there is provided a system and method for authenticating game licenses. With reference to FIG. 1, there is provided an embodiment of a system having a plurality of computing/network devices 110 that are in operative communication with an auditing server 112. While only one computing device 110 is illustrated in FIGS. 1-2, it will be understood that a given system may comprise any number of computing devices. The computing device 110 may be, but is not limited to, a game console, a personal computer, a server computer, a laptop computer, a tablet computer, a personal digital assistant, a mobile phone, a wireless communication device, an onboard vehicle computer, or any other device capable of communication with a computer network.

The computing device 110 may comprise a software 120 that requires a license to be authorized for use. The device 110 may also comprise an auditing tool or application 122. The auditing application 122 may be any program or application that collects identifying information regarding the computing device 110 and/or any software (e.g., software 120) on the computing device 110. The auditing application 122 may comprise a stand alone application or an applet running within a web browser on the device 110 (e.g., an applet comprising executable code for a Java Virtual Machine). The auditing application 122 may be embedded in or associated with another software application, including but not limited to software 120. For example, the auditing application 122 may be embedded in or associated with a tool bar of a software application, such as, for example, a web browser. The auditing application 122 may prompt the user to register with an online software registration service, or may run in the background with little or no interaction with the user of device 110.

The auditing application 122 may include a registration routine that collects information regarding computing device 110 by checking a number of parameters which are expected to be unique to the computing device environment. A parameter so selected may be a user-configurable parameter or a non-user-configurable parameter. Examples of user-configurable parameters may include hard disk volume name, user name, device name, user password, hard disk initialization date, or any other computer readable data stored in memory of the computing device that is created, selected, or determined by the end user. A parameter so selected may also be a non-user-configurable parameter, for example, read-only data stored on hardware resident in or peripheral to the computing device. Examples of non-user-configurable parameters may include information that identifies the hardware comprising the platform on which the web browser runs, such as, for example, CPU number, or unique parameters associated with the firmware in use. Non-user-configurable parameters may further include system configuration information, such as amount of memory, type of processor, software or operating system serial number, etc. In the alternative, or in addition, the parameters checked may include virtual machine specifications. Examples of virtual machine specifications may include, but are not limited to, information relating to virtual processors, virtual BIOS, virtual memory, virtual graphics, virtual IDE drives, virtual SCSI devices, virtual PCI slots, virtual floppy drives, virtual serial (COM) ports, virtual parallel (LPT) ports, virtual keyboard, virtual mouse and drawing tablets, virtual Ethernet card, virtual networking, virtual sound adapter, etc.

Based on the collected information, the auditing application 122 may generate a device identifier 124 that is unique for the user computer 110. In the alternative, or in addition, the application 122 may gather and send the device parameters to a remote server, such as auditing server 112, which in turn generates the device identifier 124. The device identifier 124 may be stored in a hidden directory of the device 110 and/or at a remote location, such as the auditing server 112. The device identifier 124 may incorporate the device's IP address and/or other geo-location code (e.g., GPS data, cell site triangulation data, or the like, or combinations thereof) to add another layer of specificity to device's unique identifier.

It is noted that an application (e.g., auditing application 122) running on the computing device or otherwise having access to the computing device's hardware and file system may generate a unique device identifier (e.g., device identifier 124) using a process that operates on data indicative of the computing device's configuration and hardware. The device identifier may be generated using a combination of user-configurable and non-user-configurable machine parameters as input to a process that results in the device identifier, which may be expressed in digital data as a binary number. Each machine parameter is data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier, that has a very high probability of remaining unchanged during normal operation of the target device. Thus, the resulting device identifier should be highly specific, unique, reproducible and stable as a result of properly selecting the machine parameters.

The application for generating the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured application operating or otherwise having had access to the same field security device for which the device identifier was first generated. Conversely, each identifier, again to a very high degree of certainty, can be successfully reproduced by the suitably configured application operating or otherwise having access to the same field security device on which the identifier was first generated.

The application may operate by performing a system scan to determine a present configuration of the field security device. The application may then select the machine parameters to be used as input for generating the unique device identifier. Selection of parameters may vary depending on the system configuration. Once the parameters are selected, the application may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; BlackBox model; BlackBox serial; BlackBox details; BlackBox damage map; BlackBox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

In one example, the device identifier may also be generated by utilizing machine parameters associated with one or more of the following: machine model, processor model, processor details, processor speed, memory model, memory total, network model of each Ethernet interface, network MAC address of each Ethernet interface, BlackBox Model, BlackBox Serial (e.g., using Dallas Silicone Serial DS-2401 chipset or the like), OS install date, nonce value, and nonce time of day.

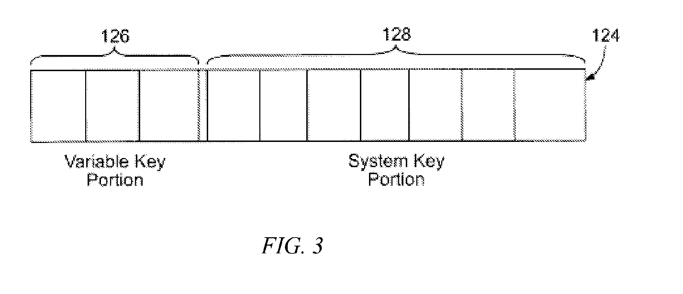

With reference to FIG. 3, in one embodiment, the device identifier 124 may include two components - namely, a variable key portion 126 and a system key portion 128. The variable key portion 126 may be generated at the time of registration of computing device 110 by reference to a variable platform parameter, such as via reference to system time information, although other parameters which are variable may be utilized in other embodiments. The system key portion 128 may include the above described parameters expected to be unique to the device 110, such as, for example, hard disk volume name, user name, computer name, user password, hard disc initialization date, or combinations thereof. Portions 126 and/or 128 may be combined with the IP address and/or other platform parameters of the device 110. Further details regarding device identifiers 124, such as machine fingerprints and parameters expected to be unique for the a given computer, can be found in U.S. Application No. 08/124,718, filed September 21, 1993, titled "System for Software Registration," now issued as U.S. Patent No. 5,490,216, which application is specifically incorporated herein, in its entirety, by reference. It is noted that device identifiers, or portions thereof, may be encrypted to add an additional layer of specificity and security.

With reference once again to FIG. 1, the auditing application 122 may also include a registration routine that collects or receives information regarding the software 120 on device 110 by checking information which is expected to be unique to software 120, such as, for example, the software serial number. The collected software identifier may include the software serial number, product identification number, product key, etc. The collected software identifier may include information regarding where the software was sold or distributed, who the buyers, sellers, and/or distributors were, which stores the software was sold in, etc. It is noted that the software identifier may be unique to particular copy of software, such as when the software is licensed to a single user In the alternative, or in addition, the software identifier may be unique to particular type or group of a software, such as when the software is licensed to a defined group of users.

The embodiments described herein comprise an auditing application 122 that collects the software identifier 130 for software 120; however, it will be understood that the systems and components described herein can be adapted to collect one or more types of software identifiers for a plurality of software applications. The software identifier 130 may be stored in a hidden directory of the device 110 and/or at a remote location, such as the auditing server 112. For example, in one approach, the software identifier, device identifier, and/or combinations thereof may be hidden in multiple locations on the computing device and may be crosschecked for tampering, corruption, etc. In another approach, the software identifier, device identifier, and/or combinations thereof may be hidden in multiple locations, including one or more remote locations/servers ,and may be crosschecked with each other to verify the integrity of the identifiers.

The auditing application 122 may also include a registration routine that collects or receives information regarding the geo-location code 140 of the device 110. The geo-locater 140 may comprise the IP address, GPS data, cell site triangulation data, or the like for the device 110.

Auditing application 122 may electronically send the device identifier 124 and the software identifier 130 to the auditing server 112. In the alternative, or in addition, a geo-location code 140 may be associated with the device identifier 124 and/or the software identifier 130 and may sent to the auditing server 112, such as via a secured network connection. The auditing server 112 may encrypt and store the data, such as the device identifier 124, the software identifier 130, and/or the geo-location code 140, received from the computing device 110. The auditing server 112 may receive such data from a plurality of computing devices and store the received data in an audit database 114.

In one embodiment, the auditing application 122 may generate an audit number 142 by associating the software identifier 130 with the device identifier 124 and/or geo-location code 140, and may send the generated audit number 142 to the auditing server 112. In another embodiment, the application 122 may send the device identifier 124, the software identifier 130, and/or the geo-location code 140 to the server 112 in a piecemeal manner. The server 112 may in turn generate the audit number 142. The auditing server 112 may receive or generate audit numbers from a plurality of computing devices and store the received audit numbers in the audit database 114.

It is noted that the audit number 142 may be generated from the device identifier 124, the software identifier 130, and/or the geo-location code 140 via any number of suitable approaches. For example, the software identifier 130 may be concatenated or linked with the device identifier 124 and/or geo-location code 140. It is also noted that the audit number 142 may be stored in a hidden directory of the device 110 and/or at a remote location, such as the auditing server 112. It is further noted that the device identifier 124, the software identifier 130, and/or the geo-location code 140 may at a later time be extracted from the audit number 142.

When a user of a computing device, including but not limited to computing device 110, installed with auditing application 122, attempts to run the software 120, the auditing application 122 in response may transmit the software identifier 130 associated with the device identifier 124 and/or the geo-location code 140 (or an audit number 142 generated from such data) to the auditing server 112, which in turn may store the received data in the audit database 114.

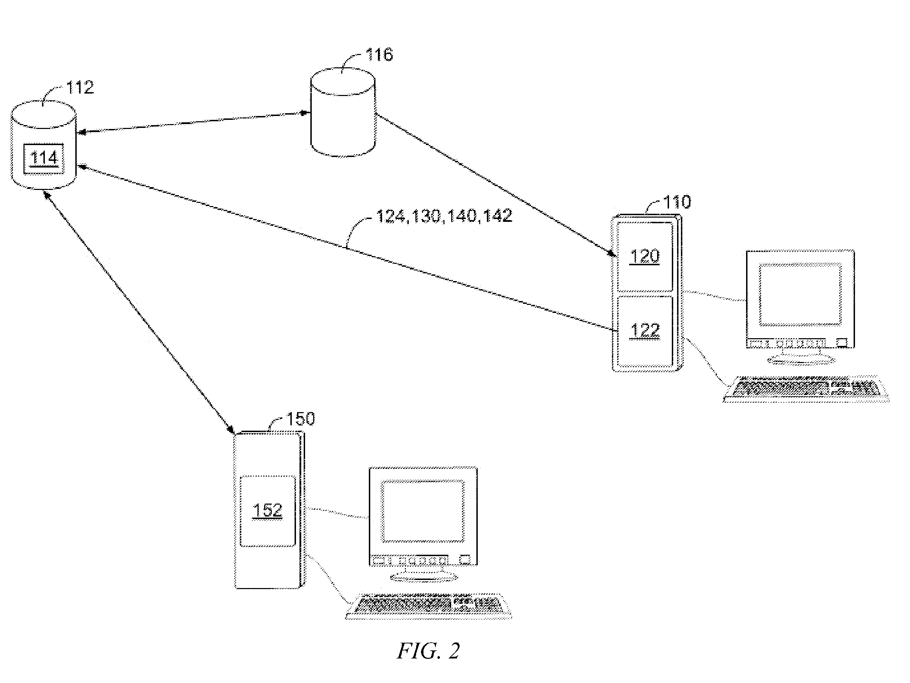

With reference to FIG. 2, there is provided an embodiment of a system that further comprises an optional authentication server 116 that is in operative communication with the auditing server 112. When a given user tries to run software 120 on his/her computing device, the authentication server 116 may access the audit database 114 on auditing server 112 to determine whether to allow his/her of the software 120. The authentication server 116 may receive/access the license terms for a particular software from the auditing server 112 or another server or computing device.

In one embodiment, the authentication server 116 may disallow use of the software 120 beyond a defined maximum number of allowed users or seats (which may be defined by the software license). The server 116 may analyze the data in the audit database 114 and determine how many seats are currently utilizing software 120. If the number of currently allowed seats meets or exceeds the maximum number of allowed seats, the server 116 may throttle or disallow the use of software 120 by more seats; otherwise, the server may allow the use of the software 120. In another embodiment, the authentication server 116 may throttle or disallow use of the software 120 if its software identifier is already associated with a different device identifier and/or a different IP address in the audit database 114; otherwise, the server 116 may allow use of the software 120. The authentication server 116 may collect data regarding the instances of allowed and disallowed software use, and may share such data with the auditing server 112.

With reference to the embodiments of FIGS. 1-2, the auditing server 112 may be in operative communication with a management device 150, which may be any device capable of communication with a computer network, such as, for example, a personal computer, a server computer, a laptop computer, a tablet computer, a personal digital assistant, a mobile phone, or a wireless communication device. The management device 150 may comprise a management application 152, which may be any program or application, such as a stand alone application or an application that is embedded or associated with another software application, such as an applet running within a web browser on the device 150.

The management application 152 may be adapted to allow a user, such as, for example, a software manufacturer or distributor, to view the data collected and stored in the audit database 114 of the audit server 112. The present embodiment will be described in the context of a software manufacturer utilizing the management application 152. However, it will be understood that any user of the management device may utilize the management application 152.

The management application 152 may present the data in the audit database 114 in a manner that allows its user to better understand how its software is being used, legitimately or otherwise. The information organized and presented according to one or more display schemes, described in further detail in U.S. Patent Application No. 12/390,273, entitled "License Auditing for Distributed Applications," filed February 20, 2009, assigned to the assignee hereof and hereby expressly incorporated by reference herein.

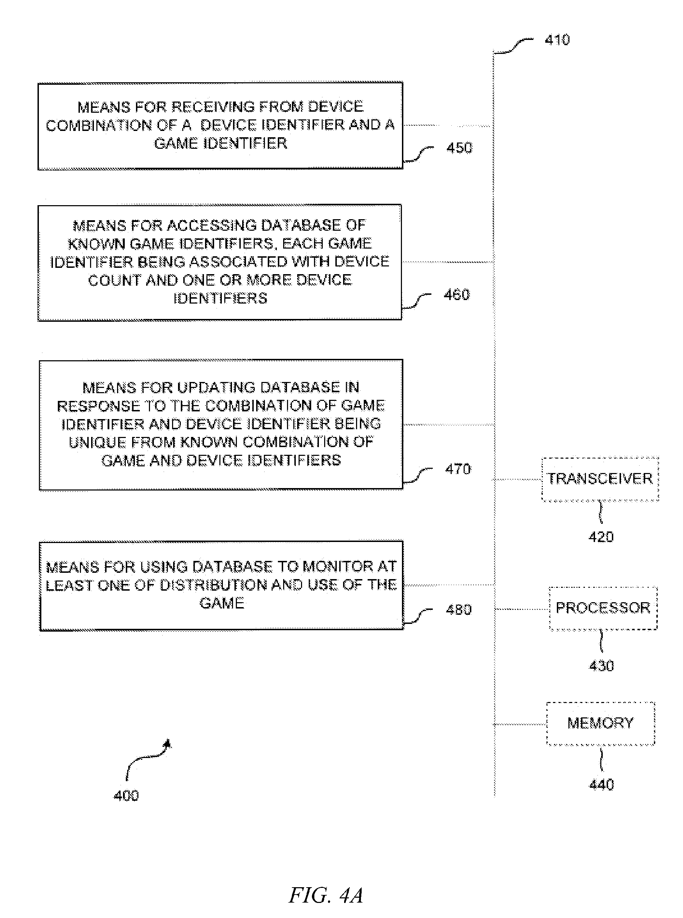

In accordance with one or more aspects of the embodiments described herein, there are provided devices and apparatuses for monitoring and/or enforcing game licenses (e.g., from the license authority side). With reference to FIG. 4A, there is provided an exemplary apparatus 400 that may be configured as either a computing device, or as a processor or similar device for use within a computing device. As illustrated, apparatus 400 may comprise a means 450 for receiving from a device a combination of a device identifier and a game/software identifier. The device identifier may be based on a combination of at least one user-configurable parameter and at least one non-user configurable parameter of the device. In this way, the device identifier is unique and no device will share the same identifier.

The apparatus 400 may comprise a means 460 for accessing a database of known game identifiers, each known game identifier being associated with a device count and one or more device identifiers. The device count corresponds to a total number of known devices on which a given game was previously played. For example, the database may contain a device count associated to a particular 'xyz racing game' indicating how many different machine(s) the 'xyz racing game' has been played on.

The apparatus 400 may comprise a means 470 for updating the database in response to the combination of the game identifier and the device identifier being unique from known combinations of the known game identifiers and the known device identifiers. For example, if the combination of the game identifier and the device identifier indicates that the 'xyz racing game' was played on a machine with a device identifier not previously known, then the database is updated to indicate that the 'xyz racing game' was played on such machine.

The apparatus 400 may comprise a means 480 for using the database to monitor at least one of distribution and the use of the game. Once the database is populated, game developers or other interested party such as game retailers, publishers, license authorities may monitor and query the database for various gaming statistics.

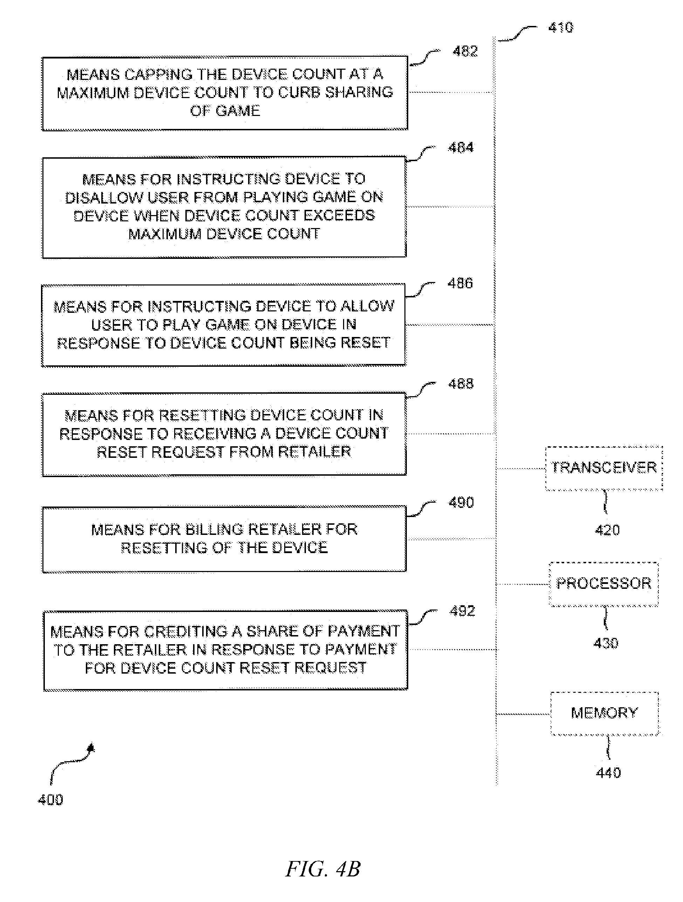

With reference to FIG. 4B, the means 460 for accessing a database of known game identifiers, each known game identifier being associated with a device count and one or more device identifiers may comprise a means 462 for capping the device count at a maximum device count to curb sharing of the game. The means 460 may further comprise a means 464 for instructing the device to disallow the user from playing the game on the user device when the device count having reached or exceeded the maximum device count. The means 460 may comprise a means 466 for instructing the device to allow the user to play the game on the user device in response to the device count being reset. The means 460 may comprise a means 468 for resetting the device count in response to receiving a device count reset request from a retailer. This may occur when the user purchase additional licensing rights to a game associated with the game identifier.

Additionally, apparatus 400 may comprise a means 490 for billing the retailer for the resetting of the device and a means 492 for crediting a share of payment to the retailer in response to a payment for a device count reset. For example, when a user makes a payment for a device count reset, the payment proceeds can be shared with the retailer involved. Alternatively, the proceeds may be shared with the retailer and the customer. As a note, the user may be the original purchaser of the game or a borrower of the game.

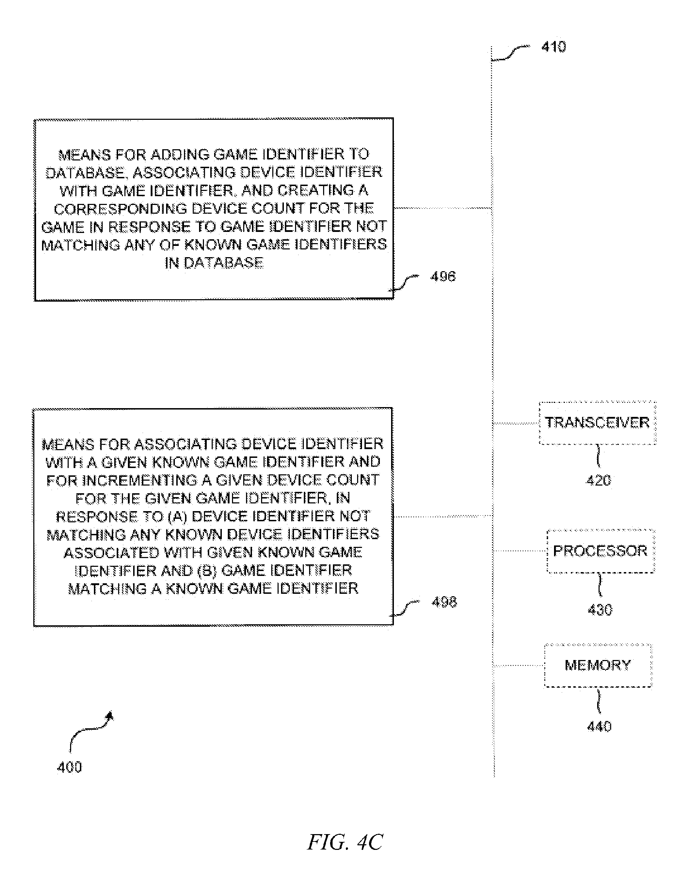

With reference to FIG. 4C, apparatus 400 may comprise a means 496 for adding the game identifier to the database, associating the device identifier with the game identifier in the database, and creating a corresponding device count for the game in response to the game identifier not matching any of the known game identifiers in the database. That is, if a game identifier does not match with any known game identifiers in the database, then the game identifier is added to the database, and the device identifier is associated with the game identifier in the database.

Apparatus 400 may comprise a means 498 for associating the device identifier with a given known game identifier and for incrementing a given device count for the given game identifier in response to the device identifier not matching any known device identifiers associated with the given known game identifier and in response to the game identifier matching a known game identifier. In other words, when a game identifier matches with a given known game identifier and when the device identifier does not match with any known device identifiers in the database, the device identifier is associated with the given known game identifier and a given device count for the given known game identifier is incremented by one. Additionally, when a game identifier matches with a given known game identifier and when the device identifier matches with any known device identifiers in the database, then auditing information in the database may be updated. In one approach, the auditing information may be updated whenever a game identifier and/or device identifier are crosschecked against known identifiers in the database.

It is noted that apparatus 400 may optionally include a processor module 430 having at least one processor, in the case of apparatus 400 configured as computing device, rather than as a processor. Processor 430, in such case, may be in operative communication with means 450-498, and components thereof, via a bus 410 or similar communication coupling. Processor 430 may effect initiation and scheduling of the processes or functions performed by means 450-498, and components thereof.

In related aspects, apparatus 400 may include a transceiver module 420 for communicating with means 450-498. A stand alone receiver and/or stand alone transmitter may be used in lieu of or in conjunction with the transceiver 420.

In further related aspects, apparatus 400 may optionally include a means for storing information, such as, for example, a memory device/module 440. Computer readable medium or memory device/module 440 may be operatively coupled to the other components of apparatus 400 via bus 410 or the like. The computer readable medium or memory device 440 may be adapted to store computer readable instructions and data for effecting the processes and behavior of means 450-498, and components thereof, or processor 430 (in the case of apparatus 400 configured as a computing device) or the methods disclosed herein.

In yet further related aspects, the memory module 440 may optionally include executable code for the processor module 430 to: (a) in response to the user attempting to play the game on the device, receive from the device a combination of (i) a game identifier for the game and (ii) a device identifier for the device, the device identifier being based on a combination of at least one user-configurable parameter and at least one non-user-configurable parameter of the device; (b) access a database of known game identifiers, each known game identifier being associated with (i) a device count corresponding to a total number of known devices on which a known game was previously played and (ii) the known device identifiers for the known devices; (c) update the database in response to the combination of the game identifier and the device identifier being unique from known combinations of the known game identifiers and the known device identifiers; and (d) use the database to monitor at least one of distribution and the use of the game. One or more of steps (a)-(d) may be performed by processor module 430 in lieu of or in conjunction with the means 450-498 described above.

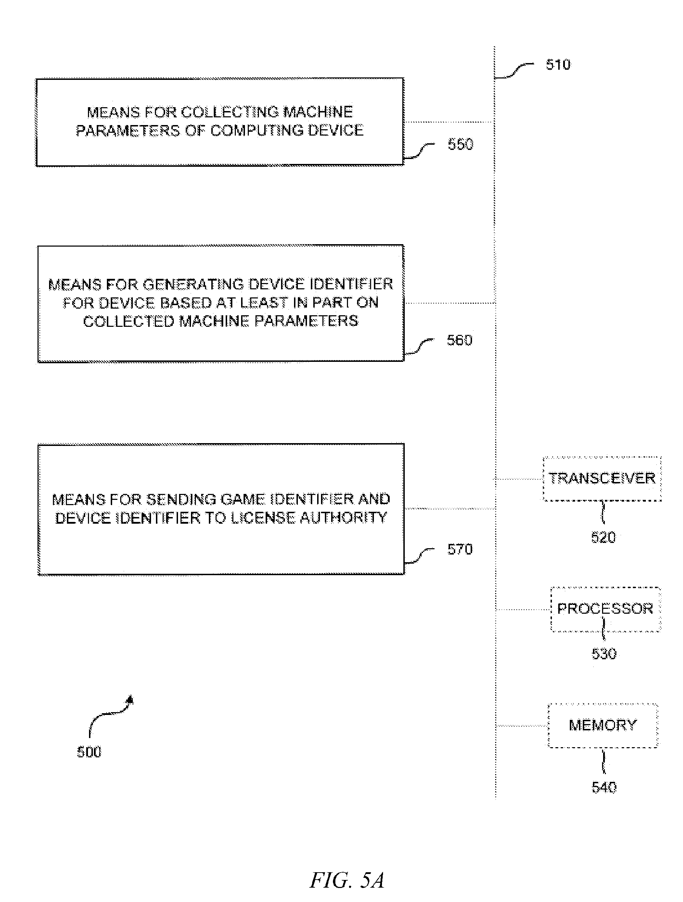

In accordance with one or more aspects of the embodiments described herein, there are provided devices and apparatuses for monitoring and/or enforcing game licenses (e.g., from the computing device user side). With reference to FIG. 5A, there is provided an exemplary apparatus 500 that may be configured as either computing device, or as a processor or similar device for use within a computing device. As illustrated, apparatus 500 may comprise a means 550 for collecting machine parameters of a computing device. The machine parameters may comprise a combination of at least one user-configurable parameter and at least one non-user-configurable parameter of the device. The apparatus 500 may comprise a means 560 for generating a device identifier for the device based at least in part on the collected machine parameters. The apparatus 500 may comprise a means 570 for sending a game identifier for the game and the device identifier to a license authority. This may occur, for example, whenever a user attempts to install the game on the device and/or play the game on the device.

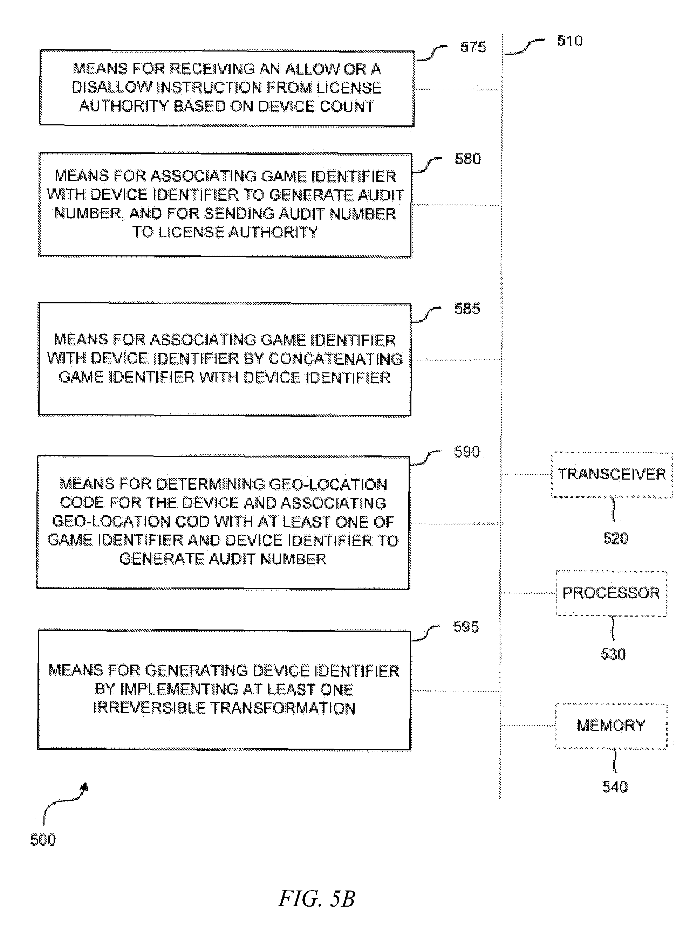

With reference to FIG. 5B, the means 570 may comprise a means 575 for receiving an allow or disallow instruction from the license authority based on a device count associated with the game identifier. The device count may correspond to a total number of known devices on which the game was previously played. The allow instruction may allow the user to play the game on the device, and the disallow instruction may prevent the user from playing the game on the device.

The apparatus 500 may comprise a means 580 for associating the game identifier with the device identifier to generate an audit number and for sending the audit number to the license authority. The transmission of the audit number may be accomplished using a transceiver, for example. The means 560 may further comprise a means 585 for associating the game identifier with the device identifier by concatenating the game identifier with the device identifier. The means 580 may also comprise a means 590 for determining the geo-location code for the device and for associating the geo-location code with at least one of the game identifier and the device identifier to generate the audit number. For example, the geo-location code may comprise an internet protocol (IP) address, and the game identifier may comprise a game serial number.

The apparatus 500 may further comprise a means 595 for generating a device identifier by implementing or executing at least one irreversible transformation such that the machine parameters cannot be derived from the device identifier. Additionally, at least one of the irreversible transformation comprises a cryptographic hash function.

It is noted that apparatus 500 may optionally include a processor module 530 having at least one processor, in the case of apparatus 500 configured as computing device, rather than as a processor. Processor 530, in such case, may be in operative communication with means 550-595, and components thereof, via a bus 510 or similar communication coupling. Processor 530 may effect initiation and scheduling of the processes or functions performed by means 550-595, and components thereof.

In related aspects, apparatus 500 may include a transceiver module 520 for communicating with means 550-595. A stand alone receiver and/or stand alone transmitter may be used in lieu of or in conjunction with the transceiver 520.

In further related aspects, apparatus 500 may optionally include a means for storing information, such as, for example, a memory device/module 540. Computer readable medium or memory device/module 540 may be operatively coupled to the other components of apparatus 500 via bus 510 or the like. The computer readable medium or memory device 540 may be adapted to store computer readable instructions and data for effecting the processes and behavior of means 550-595, and components thereof, or processor 530 (in the case of apparatus 500 configured as a computing device) or the methods disclosed herein.

In yet further related aspects, the memory module 540 may optionally include executable code for the processor module 530 to: (a) collect machine parameters of a computing device, the machine parameters comprising a combination of at least one user-configurable parameter and at least one non-user-configurable parameter of the device; (b) generate a device identifier for the device based at least in part on the machine parameters; and (c) in response to a user attempting to play the game on the device, instructs the transceiver to send a game identifier for the game and the device identifier to the license authority. One or more of steps (a)-(c) may be performed by processor module 430 in lieu of or in conjunction with the means 550-595 described above.

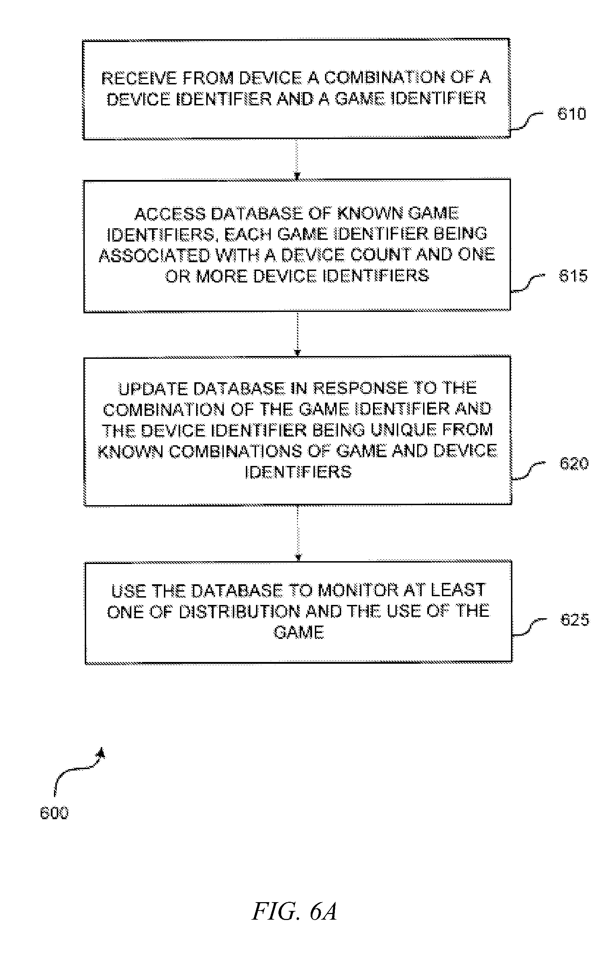

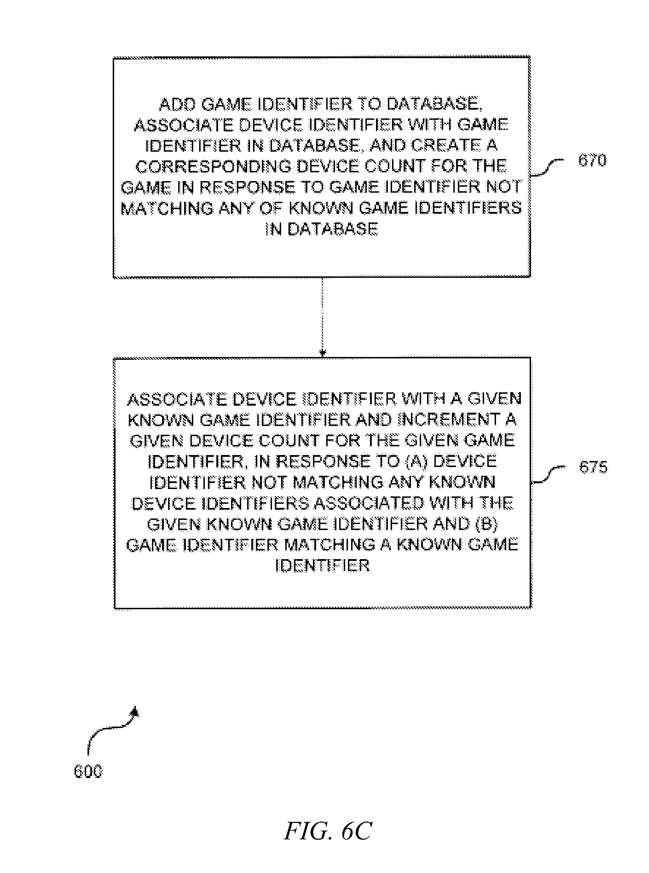

In accordance with one or more aspects of the embodiments described herein, there are provided methods for monitoring and/or enforcing licenses for games (e.g., from the license authority side). With reference to FIG. 6A, there is provided an exemplary method 600 for monitoring the use of a computer game. The method 600 may involve steps 610-675. At step 610, a combination of a device identifier and a game identifier may be received from a device. At step 615, a database of known game identifier may be accessed. Each game identifier may be associated with a device count and one or more device identifiers. At step 620, the database may be updated in response to the combination of the game identifier and the device identifier being unique from known combination of the game and device identifiers in the database. At step 625, the database may be used to monitor at least one of distribution and the use of the game.

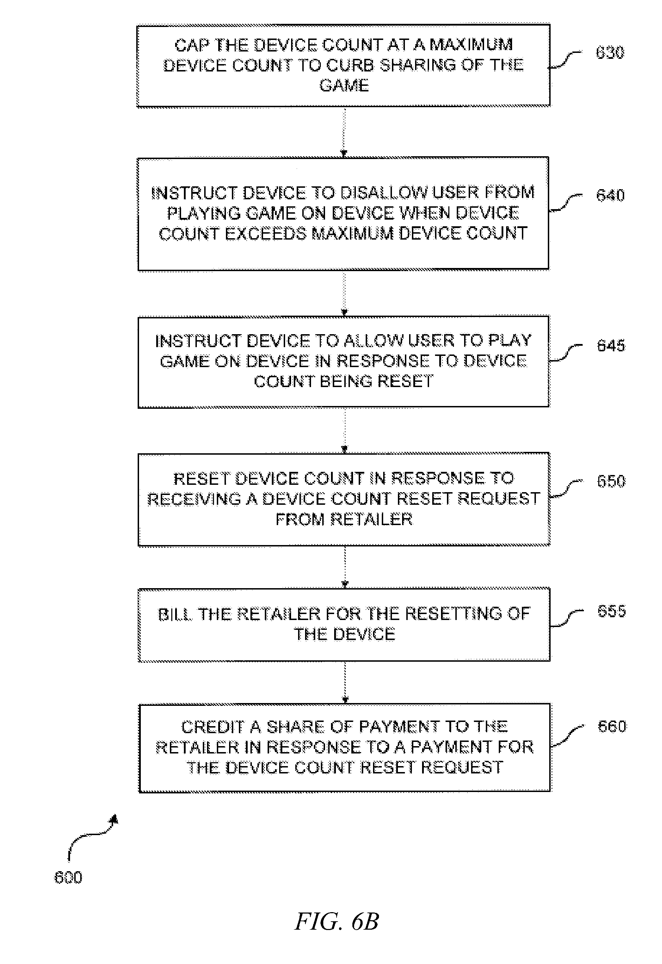

With reference to FIG. 6B, at step 630, the device count may be capped at a maximum device count. In this way, the sharing of the game may be curbed. In step 640, an instruction may be sent to the device to disallow the user from playing the game on the device when the device count has reached or exceeds the maximum device count. At step 645, in response to the device count being reset, the device may be instructed to allow the user to play the game on the device. As noted above, the device count may reset whenever the user purchases additional license at a retailer. At step 650, the device count ,may be reset in response to receiving a device count reset request from the retailer. At step 655, the retailer may be billed for the resetting of the device. At step 660, the retailer may be credited a share of the payment in response to a payment for the device count reset request.

At step 670, the game identifier is added to the database, the device identifier may be associated with the game identifier in the database, and a corresponding device count ,may be created for the game in response to the game identifier not matching any of the known game identifiers in the database. That is, if a game identifier does not match with any known game identifiers in the database, then the game identifier may be added to the database, and the device identifier may be associated with the game identifier in the database.

At step 675, the device identifier may be associated with a given known game identifier, and a given device count is incremented for the given game identifier in response to the device identifier not matching any known device identifiers associated with the given known game identifier and in response to the game identifier matching a known game identifier. In other words, when a game identifier matches with a given known game identifier and when the device identifier does not match with any known device identifiers in the database, the device identifier may be associated with the given known game identifier and a given device count for the given known game identifier may be incremented by one. Additionally, when a game identifier matches with a given known game identifier and when the device identifier matches with any known device identifiers in the database, then audit information in the database may be updated. In one approach, the audit information may be updated whenever a game identifier and/or device identifier are crosschecked against known identifiers in the database.

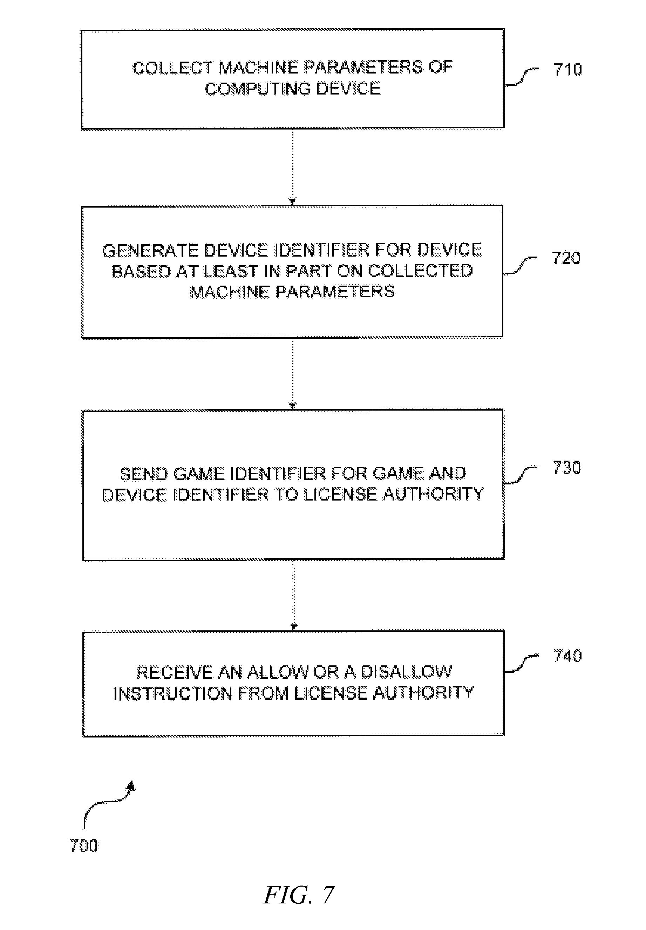

In accordance with one or more aspects of the embodiments described herein, there are provided methods for monitoring and/or enforcing licenses for games (e.g., from the computing device user side). With reference to FIG. 7, there is provided an exemplary method 700 for monitoring the use of a computer game. The method 700 may involve the following steps. At step 710, machine parameters of a computing device may be collected. The machine parameters may comprise a combination of at least one user-configurable parameter and at least one non-user-configurable parameter of the device.

At step 720, a device identifier may be generated for the device based at least in part on the collected machine parameters. At step 730, a game identifier for the game and the device identifier may be transmitted to a license authority. For example, this may occur whenever a user attempts to install the game on the device and/or play the game on the device. At step 740, an allow or disallow instruction may be received from the license authority based on a device count associated with the game identifier. The device count may correspond to a total number of known devices on which the game was previously played. The allow instruction may allow the user to play the game on the device, and the disallow instruction may prevent the user from playing the game on the device. In related aspects, the method 700 may further involve receiving one of an allow instruction and a disallow instruction from the license authority based on a device count associated with the game identifier.

While the present invention has been illustrated and described with particularity in terms of preferred embodiments, it should be understood that no limitation of the scope of the invention is intended thereby. Features of any of the foregoing methods and devices may be substituted or added into the others, as will be apparent to those of skill in the art. It should also be understood that variations of the particular embodiments described herein incorporating the principles of the present invention will occur to those of ordinary skill in the art and yet be within the scope of the invention.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. An apparatus for monitoring use of a computer game, comprising:
a transceiver component for communicating with a computing device of a user;
at least one processor operatively coupled with the transceiver component; and
a memory component operatively coupled with the at least one processor and comprising executable code for the at least one processor to:
in response to the user attempting to play the game on the device, receive from the device a combination of (a) a game identifier for the game and (b) a device identifier for the device, the device identifier being based on a combination of at least one user-configurable parameter and at least one non-user-configurable parameter of the device;
access a database of known game identifiers, each known game identifier being associated with (a) a device count corresponding to a total number of known devices on which a known game was previously played and (b) the known device identifiers for the known devices;
update the database in response to the combination of the game identifier and the device identifier being unique from known combinations of the known game identifiers and the known device identifiers; and
monitor the database for at least one of distribution and for at least one use of the game.

2. The apparatus of claim 1, wherein the device count is capped at a maximum device count to curb sharing of the game.

3. The apparatus of claim 2, wherein the at least one processor, in response to the device count having reached the maximum device count, instructs the device to disallow the user from playing the game on the device.

4. The apparatus of claim 3, wherein the at least one processor, in response to the device count being reset, instructs the device to allow the user to play the game on the device.

5. The apparatus of claim 1, wherein, in response to the game identifier not matching any of the known game identifiers in the database, the at least one processor:
adds the game identifier to the database;
associates the device identifier with the game identifier in the database; and
creates a corresponding device count for the game.

6. The apparatus of claim 1, wherein, in response to the game identifier matching a given known game identifier, the at least one processor:
in response to the device identifier not matching any known device identifiers associated with the given known game identifier, (a) associates the device identifier with the given known game identifier and (b) increments a given device count for the given known game identifier by one.

7. An apparatus for monitoring use of a computer game, comprising:
a transceiver component for communicating with a license authority;
at least one processor operatively coupled with the transceiver component; and
a memory component operatively coupled with the at least one processor and comprising executable code for the at least one processor to:
collect machine parameters of a computing device, the machine parameters comprising a combination of at least one user-configurable parameter and at least one non-user-configurable parameter of the device;
generate a device identifier for the device based at least in part on the machine parameters; and
in response to a user attempting to play the game on the device, instructs the transceiver to send a game identifier for the game and the device identifier to the license authority.

8. The apparatus of claim 7, wherein the transceiver receives one of an allow instruction and a disallow instruction from the license authority based on a device count associated with the game identifier, the device count corresponding to a total number of known devices on which the game was previously played, the allow instruction allowing the user to play the game on the device, the disallow instruction preventing the user from playing the game on the device.

9. The apparatus of claim 7, wherein:
the memory component further comprises executable code for the at least one processor to associate the game identifier with the device identifier to generate an audit number; and
the transceiver sends the audit number to the license authority.

10. The apparatus of claim 9, wherein the at least one processor associates the software identifier with the device identifier by concatenating the software identifier with the device identifier.

11. The apparatus of claim 9, wherein the at least one processor:
determines a geo-location code for the device; and
associates the geo-location code with at least one of the software identifier and the device identifier to generate the audit number.

12. The apparatus of claim 7, wherein the at least one processor generates the device identifier by implementing at least one irreversible transformation such that the machine parameters cannot be derived from the device identifier.

13. A method for monitoring use of a computer game, comprising:
in response to a user attempting to play the game on a computing device, receiving from the device a combination of (a) a game identifier for the game and (b) a device identifier for the device, the device identifier being based on a combination of at least one user-configurable parameter and at least one non-user-configurable parameter of the device;
accessing a database of known game identifiers, each known game identifier being associated with (a) a device count corresponding to a total number of known devices on which a known game was previously played and (b) the known device identifiers for the known devices; and
updating the database in response to the combination of the game identifier and the device identifier being unique from known combinations of the known game identifiers and the known device identifiers; and
using the database to monitor at least one of distribution and the use of the game.

14. The method of claim 13, further comprising, in response to the device count having reached a maximum device count, instructing the device to disallow the user from playing the game on the device.

15. The method of claim 13, further comprising, in response to the device count being reset, instructing the device to allow the user to play the game on the device.
